(19)

**Europäisches Patentamt**

**European Patent Office**

**Office européen des brevets**

(11) **EP 3 291 091 B1**

(12) **EUROPEAN PATENT SPECIFICATION**

(45) Date of publication and mention
of the grant of the patent:
**30.11.2022 Bulletin 2022/48**

(21) Application number: **16306103.9**

(22) Date of filing: **01.09.2016**

(51) International Patent Classification (IPC):
*G06F 9/50* (2006.01)

(52) Cooperative Patent Classification (CPC):
**G06F 9/5005; G06F 9/5066**

(54) **A METHOD AND SYSTEM FOR MANAGING WORKLOAD DISTRIBUTION IN A VIRTUALIZED SYSTEM**

VERFAHREN UND VORRICHTUNG ZUR VERWALTUNG DER ARBEITSLASTVERTEILUNG IN EINEM VIRTUALISIERTEN SYSTEM

PROCÈDE ET SYSTÈME DE GESTION DE LA DISTRIBUTION DE LA CHARGE DE TRAVAIL DANS UN SYSTEME VIRTUEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.03.2018 Bulletin 2018/10**

(73) Proprietor: **Alcatel Lucent**
**91620 Nozay (FR)**

(72) Inventors:
• **JIAO, Lei**
**Dublin 15 (IE)**
• **OMANA IGLESIAS, Jesus**
**Dublin 15 (IE)**
• **SALA, Alessandra**
**Dublin 15 (IE)**
• **LUGONES, Diego**
**Dublin 15 (IE)**
• **HILT, Volker Frederich**
**70435 Stuttgart (DE)**

(74) Representative: **Bryers LLP**
**Bristol & Bath Science Park**
**Dirac Crescent, Emerson's Green**
**Bristol, BS16 7FR (GB)**

(56) References cited:
**US-A1- 2005 198 102    US-A1- 2012 284 408**

• **JIAO LEI ET AL: "Smoothed Online Resource Allocation in Multi-tier Distributed Cloud Networks", 2014 IEEE 28TH INTERNATIONAL PARALLEL AND DISTRIBUTED PROCESSING SYMPOSIUM, IEEE, 23 May 2016 (2016-05-23), pages 333-342, XP032926590, ISSN: 1530-2075, DOI: 10.1109/IPDPS.2016.35 [retrieved on 2016-07-18]**
• **CHRISTINA DELIMITROU ET AL: "Quasar", ARCHITECTURAL SUPPORT FOR PROGRAMMING LANGUAGES AND OPERATING SYSTEMS, ACM, 2 PENN PLAZA, SUITE 701 NEW YORK NY 10121-0701 USA, 24 February 2014 (2014-02-24), pages 127-144, XP058044527, DOI: 10.1145/2541940.2541941 ISBN: 978-1-4503-2305-5**
• **ZHANG QI ET AL: "Dynamic workload management in heterogeneous Cloud computing environments", 2014 IEEE NETWORK OPERATIONS AND MANAGEMENT SYMPOSIUM (NOMS), IEEE, 5 May 2014 (2014-05-05), pages 1-7, XP032608926, DOI: 10.1109/NOMS.2014.6838288 [retrieved on 2014-06-17]**
• **Nedeljko Vasi? ET AL: "DejaVu : accelerating resource allocation in virtualized environments", Proceedings of the seventeenth international conference on Architectural Support for Programming Languages and Operating Systems, ASPLOS XVII, ASPLOS?12, March 3?7, 2012, London, England, UK., 1 January 2012 (2012-01-01), page 423, XP055502735, US DOI: 10.1145/2150976.2151021 ISBN: 978-1-4503-0759-8**

- JUAN M TIRADO ET AL: "Reconciling Dynamic System Sizing and Content Locality through Hierarchical Workload Forecasting", PARALLEL AND DISTRIBUTED SYSTEMS (ICPADS), 2012 IEEE 18TH INTERNATIONAL CONFERENCE ON, IEEE, 17 December 2012 (2012-12-17), pages 77-84, XP032311071, DOI: 10.1109/ICPADS.2012.21 ISBN: 978-1-4673-4565-1

**Description**

TECHNICAL FIELD

Aspects relate, in general, to a method and system for managing workload distribution in a virtualized system.

BACKGROUND

In scalable computing environments, such as cloud data centers, which are also known as virtualized systems, applications can be executed in execution environments such as virtual machines that are executed on or over or using physical hardware. Multiple virtual machine instances can be provided, each running the same or different applications or application parts, and the environment can scale the number of virtual machines that are running in order to cope with demand from users for applications or services in question.

For example, for a given service or application, the number of virtual machine instances executing the application can typically be expanded dynamically and elastically so that when load increases another virtual machine instance to service the additional load can be instantiated or spawned. This is called horizontal scalability in that it, virtually, corresponds to adding new machines to the ones already servicing the load, i.e., expanding horizontally. A virtual machine can also be expanded vertically by increasing the compute resources available to the machine. For example, increased CPU cycles can be allocated to a virtual machine. However, the time for booting and initializing additional virtual machines (VMs) is highly variable across services as it may vary from executing simple scripts to moving large amounts of data from remote databases. This variability can deteriorate customer satisfaction and result in revenue loss. ZHANG QI ET AL: "Dynamic workload management in heterogeneous Cloud computing environments",2014 IEEE NETWORK OPERATIONS AND MANAGEMENT SYMPOSIUM (NOMS), IEEE, 5 May 2014 (2014-05-05) discloses a framework that minimizes the resource management overhead by identifying a small set of workload classes for which it needs to evaluate resource allocation decisions, quickly adapts to workload changes by classifying workloads using signatures and caching their preferred resource allocations at runtime, and deals with interference by estimating an 'interference index'.

SUMMARY

According to an example, there is provided a method for managing workload distribution as provided in claim I. The set of services can be homogeneous services and the workloads are homogeneous workloads. The set of services can be homogeneous services and the workloads are heterogeneous workloads. The set of services can be heterogeneous services and the workloads are heterogeneous workloads. The method can further comprise instantiating or deleting one or more VMs or services in or for VMs to accommodate workloads in the group.

According to an example, there is provided a system for managing workload distribution as provided in claim 6. The reconfiguration manager can generate one or more instructions to instantiate or delete one or more VMs or services in or for VMs to accommodate workloads in the group.

According to an example, there is provided a reconfiguration manager as provided in claim 8. The reconfiguration manager can select a workload to be part of a group in the event that the reconfiguration cost, if the selected workload is mixed with the workloads that are already in the group, is less than the individual costs and if it does not exceed a sever capacity if selected.

According to an example, there is provided a computer program product, comprising a computer usable medium having computer readable program code embodied therein, said computer readable program code adapted to be executed to implement a method for managing workload distribution in a virtualized system as provided herein.

BRIEF DESCRIPTION OF THE DRAWINGS

Embodiments will now be described, by way of example only, with reference to the accompanying drawings, in which:

Figure I is a schematic representation of workload distribution using proactive/reactive techniques;

Figure 2 is a flowchart of a method according to an example;

Figure 3 is a schematic representation showing a reduction in reconfigurations by mixing workloads according to an example;

Figure 4 is a schematic representation showing a reduction in reconfigurations showing binary representation of workloads according to an example;

Figure 5 is a schematic representation of a system according to an example;

Figure 6 is a schematic representation of normalization according to an example;

Figure 7 is a schematic representation of filtering according to an example;

Figure 8 is a schematic representation of reuse of existing VMs to reduce reconfiguration time according to an example; and

Figure 9 is a schematic representation of a machine in the example form of a computer system according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Cloud computing is a broad concept that is currently applied to almost every existing online service. However, from a business perspective (in particular for cloud procurement), there are usually three models under consideration, Software as a Service (SaaS), Platform as a Service (PaaS), and Infrastructure as a Service (IaaS). The three models are built on top of each other and together are known as the cloud stack.

SaaS is the common cloud offering for end consumers and enables software deployment, management and upgrade. PaaS resembles SaaS but allows developers to build a computing platform for creation of applications without maintaining the software and infrastructure underneath it. The IaaS model, in turn, gives users on-demand access to the actual compute, network and storage resources together with automation, monitoring and resource management tools.

In essence, SaaS and PaaS are built on top of the IaaS model and vendors use IaaS generic resource-management capabilities to deploy and operate services and platforms. Management is focused on the individual virtual instances running a specific service. When the service demand increases, a number of instances are created and provisioned to serve such demand. Similarly, instances are terminated when service demand decreases. This behaviour occurs for each service independently of other services and applications in the cloud infrastructure, meaning that management of resources is disaggregated per service. Therefore, orchestration mechanisms must be as dynamic as the variations in service demand in order to enable reconfiguration of system resources in time without service degradation.

Such dynamic requirements are challenging to fulfil, particularly for telecom operators for example, where stringent Service Level Agreements (SLAs) must be delivered to customers. In particular, system reconfiguration is a source of instability since, for example, the time for booting and initializing additional virtual machines (VMs) is highly variable across services.

There are a number of existing techniques for ensuring SLAs and KPIs under time-varying workloads, which can be broadly classified into three categories.

1) Over-provisioning. This is the very straightforward, static approach that reserves and always provisions sufficient resources over time, according to the maximum peak demand of the workload. There is no SLA or KPI degradation and also no reconfiguration in this approach, as the amount of resources does not change. This approach handles the workload at a very coarse-grained granularity, neglects workload dynamics, wastes resources, and leads to low server utilization that translates to high operational expenditure (OPEX) and a likely increment in capital expenditure (CAPEX).

2) Reactive technique. This is the approach that tracks metrics (e.g., CPU, memory consumptions) of VMs and reconfigures (e.g., creates new) VMs whenever a pre-specified threshold for a metric is surpassed for a pre-specified duration of time. The effectiveness of this approach highly depends on manually pre-specified settings, and by definition, it will always miss, or not satisfy some portion of workload during the time period when the threshold is exceeded and the reconfiguration has not started. Even in the extreme case when that time period is set to zero, it is still problematic, as reconfiguration itself takes additional time. This is the very basic approach for dynamic scaling; it just lets reconfigurations happen and does not try to manage or reduce them.

3) Proactive technique. This approach predicts the workloads and starts reconfigurations in advance so that they can complete before the actual workload surges arrive. The prediction can often be done via the analysis or mining of historical workload traces. This approach seems good because if the reconfigurations complete in advance then there will be no missing workload and SLA or KPI problems. However, this approach changes the timing of when reconfigurations happen, but does not change the number of reconfigurations. The side effects associated with reconfigurations still exist, e.g., the reconfiguration operations of booting or removing VMs can fail themselves, making the service instable/unreliable, and the traffic load incurred by potential data volume migration also exists.

According to an example, there is provided a system and method for the orchestration of resources that decouples a service from virtual instances in order to reduce the number of reconfigurations and, therefore, achieve a more stable system. The multiplicity of workloads and services running in the infrastructure is leveraged and their associated resources are orchestrated as whole rather than managing services individually. Statistical principles that allow manipulation of the variability of workloads by combining them are used. Managing multiple workloads simultaneously enables service demands to be categorised into groups, enabling them to be combined intelligently so that control of the aggregated workload shape is gained so as to reduce reconfiguration.

Accordingly, a structured, robust, and systematic method of combining multiple workloads and multiplexing VMs is provided. SaaS/PaaS scenarios, where the operator or service provider manages and runs multiple services and resources simultaneously in a cloud, are considered in more detail below, although it will be appreciated that the system and method as provided are more broadly applicable.

A system and method as provided herein can handle a wide range of use cases for homogenous and heterogeneous services, either of which can have homogenous or heterogeneous workloads. Broadly speaking, a service may have one or more associated workloads. For example, an IMS (IP Multimedia Subsystem) service, which can be used to process audio, video, and instant message data, may comprise workloads for each data stream. That is, one workload for the service may be related to the processing of audio data, one workload may be related to the processing of video data and so on. Each of these workloads may fluctuate independently from the others over time, or they may be linked.

Homogenous services are services that are the same. Conversely, heterogeneous services are different from one another (e.g. a service for rendering video compared to a service for compiling source code). In either case, homogeneous workloads are workloads which are the same as each other (e.g. two workloads relating to the processing of audio data), whereas heterogeneous workloads may be, for example, a workload relating to the processing of video data and a workload relating to the conversion of raw image data to another format.

Accordingly, a heterogeneous or homogenous service may comprise one or more associated workloads, respective ones of which may themselves be heterogeneous or homogenous.

Typically, in an example, pre-processing steps and a workload categorization phase are provided. The pre-processing steps identify workloads and server capacities and extract information defined as fingerprints. The categorization phase works with these fingerprints, models the reconfiguration costs, groups the fingerprints into categories based on the models, and dispatches each category of workloads to a server for processing. Reconfigurations can therefore be reduced in number and consequently service instability can be reduced while improving server utilization by workload consolidation.

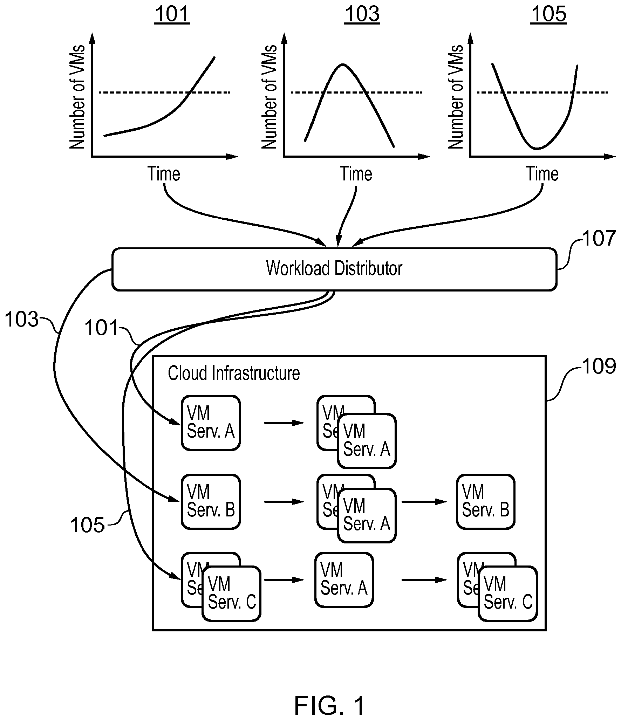

In typical Cloud environments, an input workload arrives at a workload distributor/load balancer which distributes the input following a round-robin approach. This is shown schematically in figure 1. Three variations in workload (101, 103, 105) are depicted, along with the typical response of a load balancer/workload distributer 107 resulting in a reconfiguration of VMs in the cloud infrastructure 109.

In an example, a method as system as provided herein builds on top of the workload distributor I07 by communicating with it and enforcing a more efficient distribution in such a manner that the number of reconfigurations is reduced.

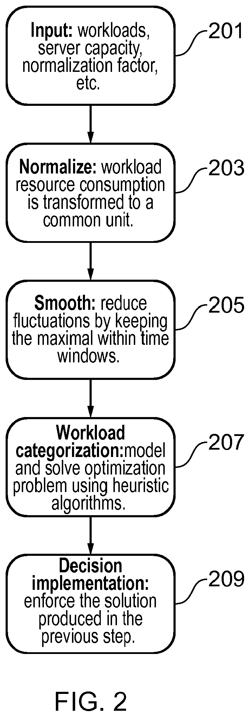

Reconfigurations can be reduced by: (I) input collection, (2) normalization, (3) smoothing, (4) workload categorization, and (5) decision implementation. This is shown schematically in figure 2, which is a flow chart of a method according to an example. This is explained in more detail below. Depending on the homogeneity or heterogeneity of the services and workloads, a step may perform different operations in different cases.

**Inputs collection.** In block 20I inputs are gathered from the cloud infrastructure. Such inputs include the multiple workloads data over time, the number of servers, the capacity of each server, the VM booting time, the time of transferring service codes between VMs co-located at a common server, etc. A workload distributor can provide the expected input.

**Normalization.** In block 203 heterogeneous workloads are normalised to make them comparable to each other in terms of the resources or VMs they consume. For example, I0 units of an audio workload may consume the same number of VMs as 500 units of a text message workload. Units can be aligned when counting the number of VMs that can be reduced by mixing the heterogeneous workloads.

**Smoothing.** In block 205 fast fluctuations in the workloads are filtered out. For example, if a reconfiguration operation is only allowed every I0 minutes, then we do not have to care about the workload fluctuations within the I0 minute window, and we only want to know the maximal workload within that window because resources always need to be allocated to satisfy the maximal workload.

**Workload categorization.** In block 207, two optimization problems for the two cases of homogenous services and heterogeneous services, respectively, are modelled and the solutions are obtained by executing an efficient, heuristic algorithm according to an example. To reduce reconfigurations, the workloads can be categorized in such a way that the reconfiguration cost for a mixed workload is less than the sum of the independent reconfiguration cost for each workload. Maximization of the reconfiguration cost saving is pursued while respecting server capacities.

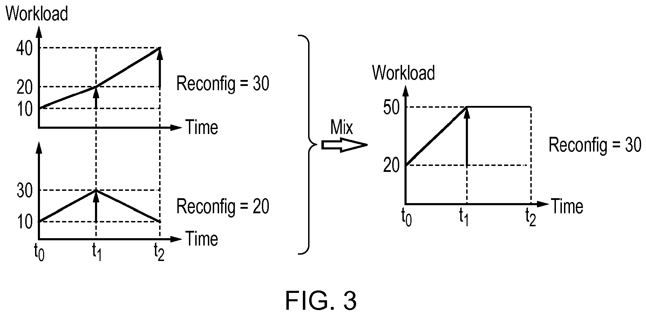

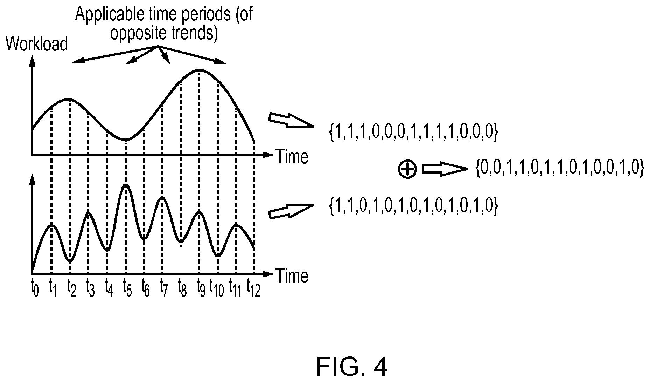

Consider two specific examples, as depicted schematically in figure 3 and 4, regarding why mixing the workloads could save the reconfiguration cost. In Figure 3, let us consider two workloads for two services. One workload increases from I0 user requests to 20 from $t_0$ to $t_1$, which incurs reconfigurations because we need to add additional VMs to handle the increasing workload, and continues to grow to 40 at $t_2$, which also incurs reconfigurations. The other workload firstly increases from I0 user requests to 30 from $t_0$ to $t_1$, incurring reconfigurations, and afterwards drops to I0 at $t_2$, incurring no reconfiguration because shutting down unneeded VMs is fast and efficient. The total reconfiguration cost for these two workloads equals 50. However, if the two workloads are mixed, then the mixed workload, illustrated also in this figure, incurs a reconfiguration cost of only 30. So, we achieve a saving of 20. In Figure 4, we see that we can in fact reduce the reconfigurations if the two workloads are mixed. The binary representations in this figure will be explained and used later. Note that, for ease of presentation, we only consider the reconfiguration of adding VMs; however, the present system and method also includes the case where one uses an analogous approach to capture or incorporate the reconfiguration of removing VMs, if necessary.

**Decision Implementation.** In block 209 the decisions of workload categorization are implemented. For example, workloads that have been determined to be mixed, in the homogenous case, can be sent or redirected to a specific server; in the heterogeneous case, besides workload redirection, we may also manipulate services across VM boundaries, because a VM handing one type of workload may not have the service for another type of workload installed.

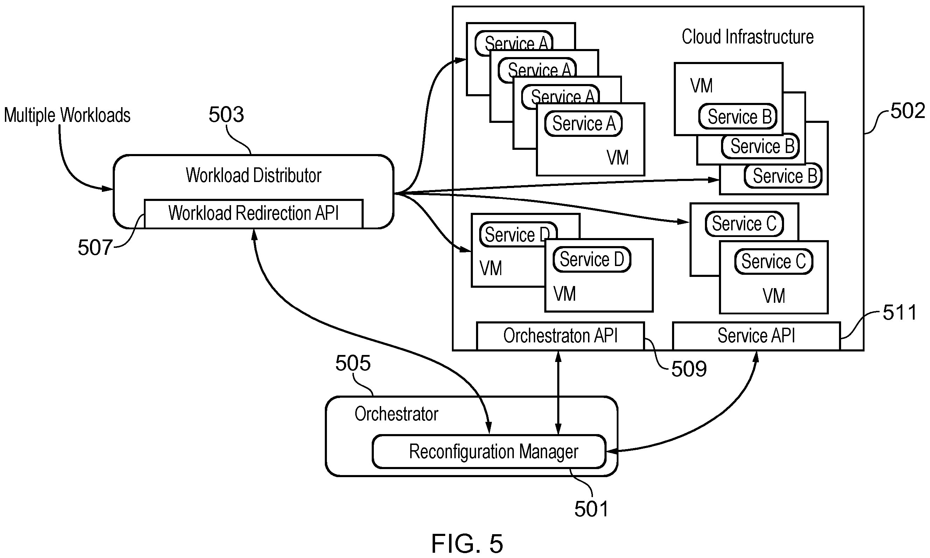

Figure 5 is a schematic representation of a system according to an example. As can be seen, a Reconfiguration Manager 501, which can be provided as a component or an independent service, is used to intelligently distributes the multiple workloads to the services, creates/removes VMs, and moves services across VMs if necessary, with the goal of reducing the total reconfiguration costs of the entire cloud infrastructure 502 that manages the multiple services. More specifically, workloads from, for example, customers and users enter a cloud data center via the workload distributor 503 which is responsible for dispatching different types of workloads to their corresponding services. The reconfiguration manager 501, which can be implemented as a component of the orchestrator 505 as in figure 5, distributes the multiple workloads to the services, creates/removes VMs, and moves services across VMs if necessary, with the goal of reducing the total reconfiguration costs of the entire cloud infrastructure that manages the multiple services. It communicates with the workload distributor 503 via a workload redirection API 507, and communicates with the cloud infrastructure via the orchestration API 509 (regarding VM-related operations) and the service API 511 (regarding service-related operations across or inside VMs).

While the result of a block, as depicted in figure 4, becomes the input of the next step, each block can also use additional inputs which can be collected in advance. For normalization, a normalization factor, which is defined as how much workload of one type consumes the same amount of resources (i.e., the same number of VMs) as I unit workload of another type can be used. Such factors are typically made available by profiling the services and workloads, as is done in today's cloud data centers.

For smoothing, a reconfiguration frequency, which is specified by the service provider or cloud operator, and the data of all the workloads under consideration can be used. The workload data can be available in advance, because in reality there often exist patterns such as the daily or weekly ones in the workloads, which can be determined by analyzing existing workload traces, although these patterns could be different for different types of workloads.

For workload categorization, the number of servers under consideration and the capacity of each server, which are sufficient for the case of homogenous services can be used. For the case of heterogeneous services, the VM booting time, the time of transferring the codes of one service from its VMs to the VM of another service when these two VMs are co-located at the same server are also used. For decision implementation, APIs are used so that the method as provided can interact with the cloud system/service and implement the workload categorization decisions.

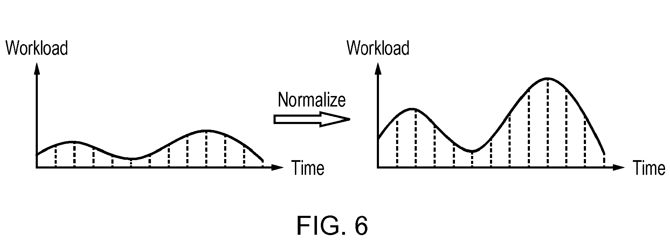

Normalization refers to the procedure of making the heterogeneous (i.e., different types of) workloads comparable to each other. Consider the following example. I0 units of audio traffic may require the same number of VMs as maybe 500 units of messaging traffic. That is, the audio workload is less resource-efficient than the messaging workload. In order to determine whether mixing an audio workload and a messaging workload can save reconfigurations, the messaging workload can be normalised, i.e., divide it by 50, because 50 = 500/I0. If a messaging workload is represented as a time series vector, then every element in it can be divided by 50. The audio may be normalized instead of messaging, by multiplying every value in the corresponding time series vector by 50, as visualized schematically in Figure 6.

Normalizing a workload, as long as all the workloads under consideration are made comparable, does not influence the later judgment of whether and how many reconfigurations can be saved. Note that if the input workloads are homogenous (i.e., of the same type) normalization may not be required.

Smoothing refers to the procedure of filtering out small, fast fluctuations in the workload. Such fluctuations refer to those that vary faster than the granularity of time intervals at which reconfigurations are performed. For example, if the number of VMs is changed only every I0 minutes, then it does not make any difference how the workload varies within these I0 minutes; what matters is the maximal workload within the I0 minutes, as it determines the number of VMs in these 10 minutes. So, given a workload, the maximal workload value in every I0 minutes can be determined and the vector of maximal values can be used to represent the original workload.

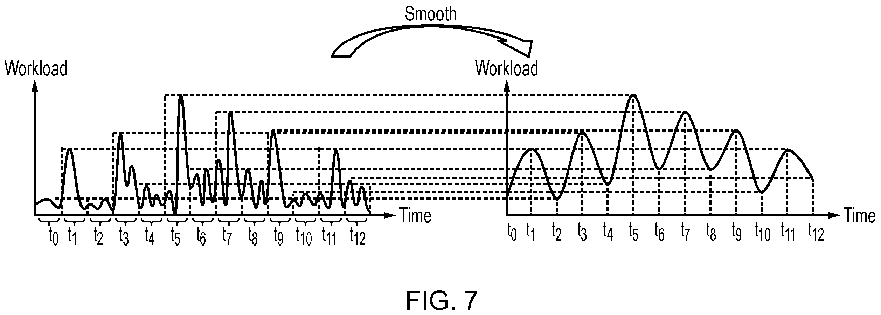

Figure 7 schematically illustrates this process. Note that the left sub-figure is the original workload which is composed of I3 time slots, and in the right sub-figure, a single, maximal workload value is used to represent each time slot. The curve, which can be considered as the "fingerprint" of the original workload, shows the trend of the variations of the maximal values. The benefit of doing this is that it reduces the information that needs to be stored for workload categorization later. This step of smoothing applies to both homogenous and heterogeneous workloads.

In an example, normalised and smoothed workloads are categorised. The two cases of homogenous services and heterogeneous services, respectively are considered.

Homogenous services refer to services that are the same and process either homogenous workloads or heterogeneous workloads. Such multiple services can also be called multiple instances of a single service. Note that it is possible for a service to handle heterogeneous workloads of different types. For example, the IMS (IP Multimedia Subsystem) service can handle audio, video, and instant messages. The workloads processed by different instances of a service may vary differently as time elapses. For example, in IMS, the audio traffic may grow while the text message traffic drops, or they may have different fluctuations in terms of shape and amplitude.

Before describing the categorization procedure, the reconfiguration cost of a single time-varying workload is described as follows. Suppose there are $T$ time slots under consideration, denoted by a set $T = \{1,2,...,T\}$. A vector $\vec{w} = \{w_1, w_2,..., w_t,..., w_T\}$ is used to denote the workload, where $w_t$, $t \in T$ is the workload value at time slot $t$, which is a non-negative integer and can be in terms of the number of user requests, the amount of traffic volume, and so on. Given $\vec{w}$, all of its increasing phases $T_k$, $k \in \{1,2,..., K\}$, where $K$ is the total number of the increasing phases are identified. An increasing phase $T_k \subseteq T$ is a set of consecutive time slots that satisfy the following condition: $w_p < w_q$, $\forall p,q \in T_k$ where $p < q$, meaning that the workload $\vec{w}$ increases monotonically during the time period of an increasing phase.

Note that $T_k \cap T_{k'} = \varnothing$, $\forall k, k' \in \{1,2,...,K\}$ where $k \neq k'$, and also that if $p \notin T_k$, $\forall k \in \{1,2,...,K\}$, then $w_{p-1} \geq w_p$. It is assumed that $w_0 = 0$. Based on all these notations, the reconfiguration cost in terms of the number of VMs is defined as:

$$\alpha \sum\nolimits_{k=1}^{K} (\max_{t \in T_k}(w_t) - \min_{t \in T_k}(w_t))$$

where $\alpha$ is a coefficient that transfers the a given workload value to the number of VMs that are required in order to process such workload. $\alpha$ is known in prior, by profiling the service for example, which is commonly true in today's data centers. Identifying all the increasing phases of a given workload vector is done by comparing every pair of consecutive workload values in that vector.

The criteria to be satisfied by the workloads if they are categorized as a group are now described. According to an example, the workloads of a group should have a reconfiguration cost for the mixed workload which is less than the sum of the reconfiguration cost for each workload independently; besides, as the mixed workload may be placed on a server, the mixed workload should not exceed the server capacity.

Suppose a group of workloads is I. A single workload in this group is $\vec{w_i} = \{w_{i,1}, w_{i,2},..., w_{i,t},..., w_{i,T}\}$, $\forall i \in I$, and the mixed workload is thus $\sum_{i \in I} \vec{w_i} = \{\sum_{i \in I} w_{i,1}, \sum_{i \in I} w_{i,2},..., \sum_{i \in I} w_{i,t},..., \sum_{i \in I} w_{i,T}\}$. Then, $T_{i,k} \subseteq T$, $k \in \{1,2,...,K_i\}$, $\forall i \in I$ is the set of the increasing phases in $\vec{w_i}$, which satisfies $w_{i,p} < w_{i,q}$, $\forall p,q \in T_{i,k}$ where $p < q$.

Similarly, note $T_{i,k} \cap T_{i,k'} = \varnothing$, $\forall k,k' \in \{1,2,...,K_i\}$ where $k \neq k'$, and also $\forall i \in I$, if $p \notin T_{i,k}$, $\forall k \in \{1,2,...,K_i\}$, then $w_{i,p-1} \geq w_{i,p}$. Further, $T_k \subseteq T$, $k \in \{1,2,...,K\}$ is used to denote the increasing phases of the mixed workload. The workloads in I must satisfy the following two conditions:

$$\sum_{k=1}^{K} (\max_{t \in T_k}(\sum_{i \in I} w_{i,t}) - \min_{t \in T_k}(\sum_{i \in I} w_{i,t})) < \sum_{i \in I} \sum_{k=1}^{K_i} (\max_{t \in T_{i,k}}(w_{i,t}) - \min_{t \in T_{i,k}}(w_{i,t})),$$

and

$$\max_{t \in T}(\sum_{i \in I} w_{i,t}) \leq C$$

where $C$ is the capacity of the target server. The first condition ensures the saving of the reconfiguration cost and the second condition ensures the compliance with the server capacity.

In an example, there may be different objectives for workload categorization. One objective can be categorizing the workloads into the minimum number of groups, while each group satisfies the two conditions given above. This captures the intention of using as few severs as possible to host the mixed workloads so that the overall server utilization and scalability of the data center is improved.

Another objective can be categorizing the workloads into groups so that the sum of the reconfiguration cost savings of all groups is maximized, while each group satisfies the second condition given above (and in contrast, in this case the first condition is used in the objective). This saves as much reconfiguration cost as possible so that the overall KPI of the data center is pushed to an extreme optimum, while it does not care much about the number of groups, or how many servers are used to achieve that goal.

According to an example, to solve the workload categorization problem, the saving of the reconfiguration cost is maximised by converting the problem to a series of sub-problems and solving each sub-problem separately. In order to categorize the workloads into groups and to put each group on a server, the problem is solved for the first server for all the workloads, and then for the next server for the workloads that have not been assigned to the first server, and further for the next server for the workloads that have not been assigned to the first two servers, and this is repeated for servers until every workload is assigned to a certain server. The servers can have the same capacity or different capacities. Under such a greedy scheme, now the issue is how to solve the problem for a single server, i.e., how to select the workloads to be categorized into a single group to maximize the reconfiguration cost saving while respecting the capacity of the target capacity.

According to an example, a recursive relationship is generated so that either a recursive computation or a dynamic programming method can be implemented in order to obtain the optimal solution to a workload categorization problem for a single server. Using $f(i,\vec{C})$ to denote the optimal reconfiguration cost saving for the first $i$ workloads, and using $\vec{C} = \{C, C,..., C\}_T$, a vector of $T$ elements with every element being $C$, to denote the residual capacity (i.e., the free capacity or the capacity to be occupied), the $(i + 1)$ th workload $\vec{w_{i+1}}$ is considered.

If it is rejected to be part of the group, then we have $f(i + 1, \vec{C}) = f(i, \vec{C})$; if we accept it to the group, then we have $f(i + 1, \vec{C} - \vec{w_{i+1}}) = reconfig(f(i,\vec{C}), \vec{w_{i+1}})$, where $\vec{C} - \vec{w_{i+1}}$ calculates the new residual capacity, and $reconfig(f(i,\vec{C}), \vec{w_{i+1}})$ is a function that calculates the new reconfiguration cost saving, given the current reconfiguration cost saving $f(i,\vec{C})$. To sum up, we have the following:

$$f(i,\vec{C}) = \begin{cases} \max(f(i-1,\vec{C}), reconfig(f(i-1,\vec{C} - \vec{w_i}), \vec{w_i})), & \text{if } \vec{w_i} \leq \vec{C}; \\ f(i-1,\vec{C}), & \text{otherwise.} \end{cases}$$

Note that, in the above, one vector subtracting another vector is defined as using each element of the former to subtract each corresponding element of the latter, and one vector being no larger than another vector is defined as each element of the former being no larger than each corresponding element of the latter.

The function $reconfig(f(i,\vec{C}), \vec{w_{i+1}})$ is used to calculate the reconfiguration cost saving of mixing the existing workloads, i.e., a subset of $\{\vec{w_1}, \vec{w_2},..., \vec{w_i}\}$, and the workload $\vec{w_{i+1}}$ based on the previous models and definitions.

A greedy method that may not obtain the optimal solution like the above recursion but can obtain a solution of reasonably good quality in faster execution is also provided according to an example. The workloads are sorted in ascending order based on $\max_{t \in T}(w_{i,t})$ which can be deemed as the "size" of the workload $\vec{w_i}$.

Note $\max_{t \in T}(\sum_{i \in I} w_{i,t}) \le \sum_{i \in I} \max_{t \in T}(w_{i,t})$, indicating if the right-hand side of this inequality does not exceed the server capacity, the left-hand side is guaranteed not to exceed it. After sorting, the workload is traversed from the one with the smallest size to the one with the largest size. A workload is selected to be part of a group only if it can save the reconfiguration cost if it is mixed with the workloads that are already in this group and if it does not exceed the sever capacity if selected.

To quickly determine whether two workloads, if mixed, save the reconfiguration cost, a binary representation method is developed, as shown in Figure 4. That is, given a workload $\vec{w_i}$ of $T$ elements, a binary vector $\vec{b_i}$ is composed to represent it, where $b_{i,t} = 1$ if $w_{i,t-1} < w_{i,t}$, and $b_{i,t} = 0$ otherwise. For two workloads represented by two binary vectors $\vec{b_i}$ and $\vec{b_j}$, the reconfiguration cost can be saved if $\vec{b_i} \oplus \vec{b_j} \ne 0$, where $\oplus$ is the exclusive-or operation. This is because the only possibility to save the reconfiguration cost by mixing two workloads is that one workload increases in a time period when the other workload decreases in the same time period, or vice versa, which is captured by the binary vector and the exclusive-or operation. If two workloads are mixed, then the binary vector that represents this mixed workload is calculated so that the new binary vector can be used in the future to determine whether it can save the reconfiguration cost if this mixed workload is further mixed with a third workload or other workloads. This is done as follows: the exclusive-or operation of $\vec{b_i}$ and $\vec{b_j}$ produces a new vector, and in this vector at the $t$ th bit where there is I, it is kept as I if $w_{i,t-1} + w_{j,t-1} < w_{i,t} + w_{j,t}$, and changed to 0 otherwise. Regarding the corresponding reconfiguration cost saving, for the $t$ th bit where there is I, its associated reconfiguration cost saving is $\max(w_{i,t-1} - w_{i,t}, w_{i,t-1} - w_{j,t})$; then, a summation for all the I bits can be performed to obtain the total reconfiguration cost saving for the two workloads that are mixed.

For heterogeneous services, which are services that are different and process heterogeneous workloads that can also vary differently as time elapses, the difference to the case of homogenous services is that the services themselves need to be considered in addition to the workloads when designing methods to reduce the reconfiguration cost.

Unlike the case of homogenous services, the workloads cannot simply be categorised in order to co-locate or mix them because the workloads, even if mixed, still require different services to process them separately. Using the previous example, suppose one workload increases, which incurs some reconfiguration cost because of the need to add additional VMs, and the other workload decreases in the same time period, which does not incur reconfiguration cost. Simply mixing them does not make sense as VMs that host the services still need to be added in order to process the first workload and thus the reconfiguration cost does not change.

To reduce the reconfiguration cost for the heterogeneous services, services are manipulated (e.g., create/copy, shut down) to reuse or multiplex existing VMs which are already running. Specifically, consider three different system settings that cover the vast majority, if not all, of real-world settings: (I) all services under consideration are pre-installed on every VM so that a VM can choose to activate a certain service to process its workload while deactivating the others; (2) every VM has a certain service pre-installed, and different VMs may have different services; (3) no service is pre-installed on VMs, and a VM, after booting, needs to download the required service from a certain dedicated server or server cluster in the data center.

The first setting is analogous to the case of homogenous services, and all our approaches for handling homogenous services can be applied. The third setting is actually a special case of the second setting, as will be explained later. Therefore, here we only focus on designing methods to address the second setting. Note that, like the case of homogenous services, we need to do the pre-processing steps of normalization and smoothing, if necessary, before proceeding to the next step.

Before describing how to save reconfiguration, the reconfiguration cost for heterogeneous services is modelled. Unlike homogenous services, the reconfiguration cost cannot be modelled for a single workload and in terms of the number of additional VMs. For example, one workload increases and requires I more VM while at the same time the other workload decreases and can shut down I VM.

We cannot say that the reconfiguration cost for the first workload is I and by mixing these two workloads the reconfiguration cost becomes 0, because the VM for the second workload does not have the service for the first workload, as in our second setting described above. Therefore, the correct definition for the reconfiguration cost can be, for example, in terms of time.

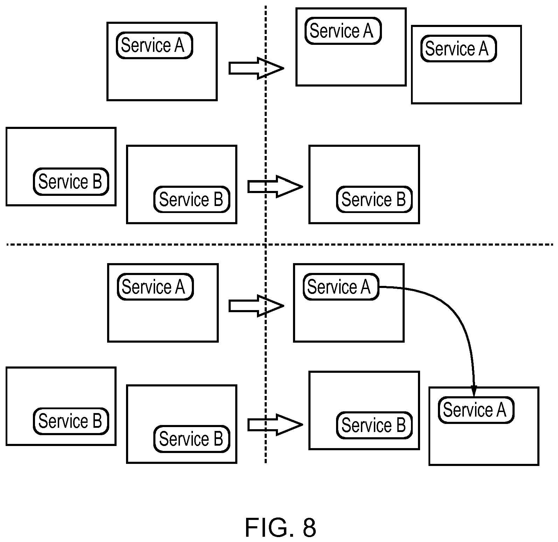

Figure 8 is a schematic representation of an example. The two columns are two time slots, and the first row shows the current practice and the second row shows using an approach according to an example. When the workload of Service A grows (so that one more Service A is needed) and the workload of Service B drops (so that one Service B is unneeded), instead of booting a new VM to host one additional Service A, we shut down one Service B without shutting down its VM, and afterwards reuse this VM to host the additional Service A. As Service A is not pre-installed in Service B's VM, as in our second case, Service A is downloaded to that VM.

Note that as both services are co-located on a single server, this downloading time (in seconds) is much shorter than the typical time of booting a new VM (in up to several minutes). The reconfiguration cost saving is the difference between the VM booting time and the service downloading time.

Given all the workloads and their corresponding services, the sum of the difference between the time of booting a new VM and the time of downloading the service to an existing VM is maximised by determining which service goes to the existing VM of which other service. Assuming one VM only hosts one service, it is determined how many instances of a selected service should go to a corresponding number of existing VMs of other selected services.

Suppose the set A represents all workloads or services and the vector $\overrightarrow{w_i} = \{w_{i,1}, w_{i,2},..., w_{i,t}..., w_{i,T}\}$ denotes the workload $i \in \Lambda$. The aim is to maximize $\sum_{t \in T} \sum_{i \in I_t} \sum_{j \in J_t} (T_i^{boot} - T_{i,j}^{transfer}) x_{i,j,t}$, where $T_i^{boot}$ is the time of booting a VM to host service $i$, $T_{i,j}^{transfer}$ is the time of downloading service $i$ to an existing VM of service $j$, $x_{i,j,t}$ is a non-negative integer and is the number of instances of service $i$ that need to be downloaded to the existing VMs of service j at the time slot $t$.

There exist constraints that need to be satisfied while pursuing the above maximization. Before introducing the constraints, note that $I_t = \{i \mid w_{i,t-1} < w_{i,t}, \forall i \in \Lambda\}$ is used to denote the set of services whose workloads increase at $t$ and use $J_t = \{j \mid w_{j,t-1} > w_{j,t}, \forall j \in \Lambda\}$ to denote the set of services whose workloads decrease at $t$. The first constraint states that the number of a service's instances that are downloaded to other existing VMs must not exceed the number of this service's VMs needed to handle the increased workload, formulated as $\sum_{j \in J_t} x_{i,j,t} \le \alpha(w_{i,t} - w_{i,t-1})$, $\forall i \in I_t, \forall t \in T$, where $\alpha$ is the coefficient, as mentioned earlier, which transfers workload into the number of VMs.

The second constraint states that the total number of the downloadable service instances must not exceed the number of existing VMs that should have been shut down, formulated as $\sum_{i \in I_t} \sum_{j \in J_t} x_{i,j,t} \le \alpha \sum_{j \in J_t} (w_{j,t-1} - w_{j,t})$, $\forall t \in T$.

The third and the also last constraint states that all those services that are involved, if co-located on a server, must not exceed the capacity of this server, formulated as $\max_{t \in T} (\sum_{i \in I_t} w_{i,t} \delta_{i,t} + \sum_{j \in J_t} w_{j,t} \delta_{j,t}) \le C$, where $C$ is the server capacity, $\delta_{i,t}$ and $\delta_{j,t}$ are functions defined as:

$$\delta_{i,t} = \begin{cases} 0, \text{if } \sum_{j \in J_t} x_{i,j,t} = 0 \\ 1, \text{if } \sum_{j \in J_t} x_{i,j,t} > 0 \end{cases}$$

and

$$\delta_{j,t} = \begin{cases} 0, \text{if } \sum_{i \in I_t} x_{i,j,t} = 0 \\ 1, \text{if } \sum_{i \in I_t} x_{i,j,t} > 0 \end{cases},$$

respectively.

The objective and the constraints comprise an optimization problem. For multiple servers, for all workloads or services this is solved for the first server, and for those workloads or services that have not been assigned to the first server, the problem is solved again for the next server, and so on, until every workload has been assigned to a certain server.

A greedy algorithm that is similar to the one proposed for the case of the homogenous services is adopted, with modifications to accommodate the downloading time. More specifically, the same technique as in the homogeneous case is used to address the capacity constraint. Secondly, for each service, the difference between the downloading time of this service and all other candidate services is sorted in descending order. The instance of this service can be downloaded or provided to the service with the highest difference, and then if there are still instances of this service that have not been downloaded, they can be downloaded to the service with the next highest difference, and so on, until all the service instances have been downloaded or until all candidate VMs have been occupied. This is repeated from the first time slot to the next one, until all time slots are traversed.

According to an example, following workload categorization decisions, each category of workloads can be redirected to a target server and VMs can be dynamically allocated at each server in order to handle the mixture of workloads upon it. If all the servers under consideration have the same capacity, then a server may be selected at random as a target server; if the servers have different capacities, then the server that is the next target server has already been specified in the greedy algorithm as in the previous step. Workload redirection can be implemented via a number of approaches, depending on specific cloud system settings; VM allocation, maintenance, and destroy is done via VM-related API provided by the cloud platform. Note that, in the case of heterogeneous services, decisions include not only workload categories, but also within each category of workloads, at each time slot we need to download how many instances of which services to the VMs of which other services at the same server, as described in the previous step. Implementing all these decisions additionally involves service transference, management, and destroy, which is done via service-related APIs.

In an example, a virtualized system can be a cloud computing system such as a cloud-based data centre for example, in which multiple virtual machine instances are executing over physical hardware resources of the system by way of a hypervisor or virtual machine monitor (VMM). That is, a hypervisor can instantiate and execute multiple virtual machine instances, and is operable to present operating systems of the virtual machine instances with a virtual operating platform and to manage the execution of the guest operating systems. Multiple instances of a number of potentially different operating systems can share the virtualized hardware resources of the system.

A virtual machine instantiated in a virtualized system can execute an application or part of an application. For example, for an application consisting of N parts, N virtual machine instances can be provided in the system in order to execute the application. Any one or more of the virtual machine instances can be horizontally scaled to provide an additional instance executing the same part of the application.

As used herein, the term virtual machine is not intended to be limiting. For example, a virtual machine can be in the form of an execution environment in the form of a container, or by way OS-level virtualization for example. That is, different isolated containers, or namespaces, or execution environments, residing in the same OS, but sufficiently isolated so that they are essentially executing in an exclusive OS environment can be used.

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client, or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module", "module", "system component" or "engine" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules or system components may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network and via one or more appropriate interfaces (e.g., APIs).

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry (e.g., a FPGA or an ASIC).

A computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

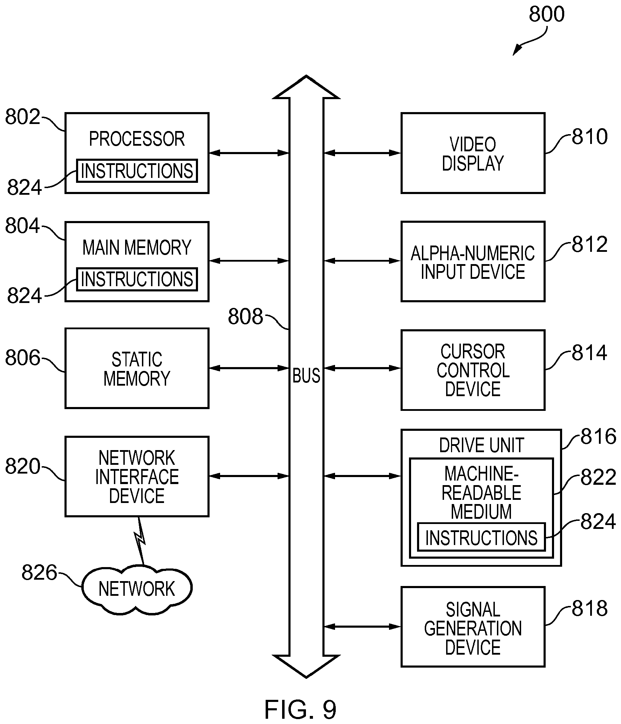

Figure 9 is a block diagram of a machine in the example form of a computer system 800 within which instructions 824 for causing the machine to perform any one or more of the methodologies discussed herein may be executed, in accordance with an example embodiment. In alternative embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processor 802 (e.g., a central processing unit (CPU), a graphics processing unit (GPU) or both), a main memory 804 and a static memory 806, which communicate with each other via a bus 808. The computer system 800 may further include a video display unit 810 (e.g., a liquid crystal display (LCD) or a cathode ray tube (CRT)). The computer system 800 also includes an alphanumeric input device 812 (e.g., a keyboard), a user interface (UI) navigation (or cursor control) device 814 (e.g., a mouse), a disk drive unit 816, a signal generation device 818 (e.g., a speaker) and a network interface device 820.

The disk drive unit 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804 and/or within the processor 802 during execution thereof by the computer system 800, the main memory 804 and the processor 802 also constituting machine-readable media. The instructions 824 may also reside, completely or at least partially, within the static memory 806.

While the machine-readable medium 822 is shown in an example embodiment to be a single medium, the term "machine-readable medium" may include a single medium or multiple media (e.g., a centralized or distributed database, and/or associated caches and servers) that store the one or more instructions 824 or data structures. The term "machine-readable medium" shall also be taken to include any tangible medium that is capable of storing, encoding or carrying instructions for execution by the machine and that cause the machine to perform any one or more of the methodologies of the present embodiments, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and compact disc-read-only memory (CD-ROM) and digital versatile disc (or digital video disc) read-only memory (DVD-ROM) disks.

The instructions 824 may further be transmitted or received over a communications network 826 using a transmission medium. The instructions 824 may be transmitted using the network interface device 820 and any one of a number of well-known transfer protocols (e.g., HTTP). Examples of communication networks include a LAN, a WAN, the Internet, mobile telephone networks, POTS networks, and wireless data networks (e.g., WiFi and WiMax networks). The term "transmission medium" shall be taken to include any intangible medium capable of storing, encoding, or carrying instructions for execution by the machine, and includes digital or analog communications signals or other intangible media to facilitate communication of such software. Although an embodiment has been described with reference to specific example embodiments, it will be evident that various modifications and changes may be made to these embodiments without departing from the scope of the present disclosure. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This description, therefore, is not to be taken in a limiting sense, and the scope of various embodiments is defined only by the appended claims.

Although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

1. A method for managing workload distribution in a system, the method comprising: for a set of services executed in the system, respective services comprising multiple workloads:

   normalising (203) the workloads to make them comparable to one another in terms of the resources they consume or the number of VMs that they use;
   smoothing (205) the normalised workloads to filter fluctuations that vary faster than the granularity of time intervals at which resource reconfigurations are performed;
   categorising (207) the normalised and smoothed workloads to generate at least one workload group comprising a set of workloads for which the cost to reconfigure resources consumed by the workloads in the workload group is less than the sum of the costs to independently reconfigure the resources; and

allocating each of the at least one workload group to a respective one of multiple servers of the system based on a capacity of the respective server,

wherein a workload is selected to be part of a group only if it can save the reconfiguration cost if it is mixed with the workloads that are already in this group and if it does not exceed the sever capacity if selected; and

wherein to determine whether two workloads, if mixed, save the reconfiguration cost, a binary representation is used, wherein, given a workload $\vec{w}_i$ of $T$ elements, a binary vector $\vec{b}_i$ is composed to represent it, where $b_{i,t}$ = 1 if $w_{i,t-1} < w_{i,t}$, and $b_{i,t} = 0$ otherwise and for two workloads represented by two binary vectors $\vec{b}_i$ and $\vec{b}_j$, the reconfiguration cost can be saved if $\vec{b}_i \oplus \vec{b}_j \neq 0$ where $\oplus$ is the exclusive-or operation.

2. A method as claimed in claim 1, wherein the set of services are homogeneous services and the workloads are homogeneous workloads.

3. A method as claimed in claim 1, wherein the set of services are homogeneous services and the workloads are heterogeneous workloads.

4. A method as claimed in claim 1, wherein the set of services are heterogeneous services and the workloads are heterogeneous workloads.

5. A method as claimed in claim 1, further comprising:
instantiating or deleting one or more VMs or services in VMs to accommodate workloads in the group.

6. A system for managing workload distribution, the system comprising:

a workload distributor (503) to receive data representing multiple workloads to be distributed to virtual machines instantiated over physical hardware of the system, the workloads related to a set of services executing in the system;
a reconfiguration manager (501) configured to:

normalise the workloads to make them comparable to one another in terms of the resources they consume or the number of VMs that they use;
smooth the normalised workloads to filter fluctuations that vary faster than the granularity of time intervals at which resource reconfigurations are performed;
categorise the normalised and smoothed workloads to generate at least one workload group comprising a set of workloads for which the cost to reconfigure resources consumed by the workloads in the workload group is less than the sum of the costs to independently reconfigure the resources; and
allocate each of the at least one workload group to a respective one of multiple servers of the system based on a capacity of the respective server,
wherein a workload is selected to be part of a group only if it can save the reconfiguration cost if it is mixed with the workloads that are already in this group and if it does not exceed the sever capacity if selected; and
wherein to determine whether two workloads, if mixed, save the reconfiguration cost, a binary representation is used, wherein, given a workload $\vec{w}_i$ of $T$ elements, a binary vector $\vec{b}_i$, is composed to represent it, where $b_{i,t}$ = 1 if $w_{i,t-1} < w_{i,t}$, and $b_{i,t} = 0$ otherwise and for two workloads represented by two binary vectors $\vec{b}_i$ and $\vec{b}_j$, the reconfiguration cost can be saved if $b_i \oplus b_j \neq 0$ where $\oplus$ is the exclusive-or operation.

7. A system as claimed in claim 6, wherein the reconfiguration manager is operable to generate one or more instructions to instantiate or delete one or more VMs or services in VMs to accommodate workloads in the group.

8. A reconfiguration manager (501) in a system, the reconfiguration manager (501) configured to:

normalise the workloads to make them comparable to one another in terms of the resources they consume or the number of VMs that they use;
smooth the normalised workloads to filter fluctuations that vary faster than the granularity of time intervals at which resource reconfigurations are performed;
categorise the normalised and smoothed workloads to generate at least one workload group comprising a set of workloads for which the cost to reconfigure resources consumed by the workloads in the workload group is less than the sum of the costs to independently reconfigure the resources; and

allocate each of the at least one workload group to a respective one of multiple servers of the system based on a capacity of the respective server,

wherein a workload is selected to be part of a group only if it can save the reconfiguration cost if it is mixed with the workloads that are already in this group and if it does not exceed the sever capacity if selected; and

wherein to determine whether two workloads, if mixed, save the reconfiguration cost, a binary representation is used, wherein, given a workload $\vec{w}_i$ of $T$ elements, a binary vector $\vec{b}_i$ is composed to represent it, where $b_{i,t}$ = 1 if $w_{i,t-1} < w_{i,t}$, and $b_{i,t} = 0$ otherwise and for two workloads represented by two binary vectors $\vec{b}_i$ and $\vec{b}_j$, the reconfiguration cost can be saved if $b_i \oplus b_j \neq 0$ where $\oplus$ is the exclusive-or operation.

9. A reconfiguration manager (501) as claimed in claim 8, wherein the reconfiguration manager is configured to select a workload to be part of a group in the event that the reconfiguration cost, if the selected workload is mixed with the workloads that are already in the group, is less than the individual costs and if it does not exceed a sever capacity if selected.

10. A computer program product, comprising a computer usable medium having computer readable program code embodied therein, said computer readable program code adapted to be executed to implement a method for managing workload distribution in a virtualized system as claimed in any of claims 1 to 5.

**Patentansprüche**

1. Verfahren zum Verwalten einer Arbeitslastverteilung in einem System, wobei das Verfahren Folgendes umfasst: für einen Satz von Diensten, die in dem System ausgeführt werden, jeweilige Dienste, die mehrere Arbeitslasten umfassen:

   Normalisieren (203) der Arbeitslasten, um sie hinsichtlich der Ressourcen, die sie verbrauchen, oder der Anzahl von VMs, die sie verwenden, miteinander vergleichbar zu machen;
   Glätten (205) der normalisierten Arbeitslasten, um Schwankungen zu filtern, die schneller variieren als die Granularität von Zeitintervallen, in denen Ressourcenneuauslegungen durchgeführt werden;
   Kategorisieren (207) der normalisierten und geglätteten Arbeitslasten, um mindestens eine Arbeitslastgruppe zu erzeugen, die einen Satz von Arbeitslasten umfasst, für die die Kosten zum Neuauslegen von Ressourcen, die von den Arbeitslasten in der Arbeitslastgruppe verbraucht werden, kleiner sind als die Summe der Kosten zum unabhängigen Neuauslegen der Ressourcen; und
   Zuweisen von jeder der mindestens einen Arbeitslastgruppe zu einem jeweiligen von mehreren Servern des Systems auf Basis einer Kapazität des jeweiligen Servers,
   wobei eine Arbeitslast nur als Teil einer Gruppe ausgewählt wird, wenn sie die Neuauslegungskosten einsparen kann, wenn sie mit den Arbeitslasten, die sich bereits in dieser Gruppe befinden, gemischt wird und wenn sie, sofern ausgewählt, die Serverkapazität nicht überschreitet; und
   wobei zum Bestimmen, ob zwei Arbeitslasten, sofern gemischt, die Neuauslegungskosten einsparen, eine binäre Repräsentation verwendet wird, wobei unter Vorgabe einer Arbeitslast $\vec{w}_i$ von T Elementen, ein binärer Vektor $\vec{b}_i$ erstellt wird, um sie zu repräsentieren, wo $b_{i,t}$ = 1, wenn $w_{i,t-1} < w_{i,t}$, und $b_{i,t} = 0$, andernfalls und für zwei Arbeitslasten, die durch zwei binäre Vektoren $\vec{b}_i$ und $\vec{b}_j$ repräsentiert werden, die Neuauslegungskosten eingespart werden können, wenn $\vec{b}_i \oplus \vec{b}_i \neq 0$, wo $\oplus$ die Exklusiv-oder-Operation ist.

2. Verfahren nach Anspruch 1, wobei der Satz von Diensten homogene Dienste sind und die Arbeitslasten homogene Arbeitslasten sind.

3. Verfahren nach Anspruch 1, wobei der Satz von Diensten homogene Dienste sind und die Arbeitslasten heterogene Arbeitslasten sind.

4. Verfahren nach Anspruch 1, wobei der Satz von Diensten heterogene Dienste sind und die Arbeitslasten heterogene Arbeitslasten sind.

5. Verfahren nach Anspruch 1, das ferner Folgendes umfasst:
   Instanziieren oder Löschen von einer oder mehreren VMs oder Diensten in VMs, um Arbeitslasten in die Gruppe aufzunehmen.

6. System zum Verwalten einer Arbeitslastverteilung, wobei das System Folgendes umfasst:

einen Arbeitslastverteiler (503) zum Empfangen von Daten, die mehrere Arbeitslasten repräsentieren, die auf virtuelle Maschinen zu verteilen sind, die über physische Hardware des Systems instanziiert sind, wobei die Arbeitslasten einen Satz von Diensten betreffen, die im System ausgeführt werden;
einen Neuauslegungsverwalter (501), der zu Folgendem ausgelegt ist:

Normalisieren der Arbeitslasten, um sie hinsichtlich der Ressourcen, die sie verbrauchen, oder der Anzahl von VMs, die sie verwenden, miteinander vergleichbar zu machen;
Glätten der normalisierten Arbeitslasten, um Schwankungen zu filtern, die schneller variieren als die Granularität von Zeitintervallen, in denen Ressourcenneuauslegungen durchgeführt werden;
Kategorisieren der normalisierten und geglätteten Arbeitslasten, um mindestens eine Arbeitslastgruppe zu erzeugen, die einen Satz von Arbeitslasten umfasst, für die die Kosten zum Neuauslegen von Ressourcen, die von den Arbeitslasten in der Arbeitslastgruppe verbraucht werden, kleiner sind als die Summe der Kosten zum unabhängigen Neuauslegen der Ressourcen; und
Zuweisen von jeder der mindestens einen Arbeitslastgruppe zu einem jeweiligen von mehreren Servern des Systems auf Basis einer Kapazität des jeweiligen Servers,
wobei eine Arbeitslast nur als Teil einer Gruppe ausgewählt wird, wenn sie die Neuauslegungskosten einsparen kann, wenn sie mit den Arbeitslasten, die sich bereits in dieser Gruppe befinden, gemischt wird und wenn sie, sofern ausgewählt, die Serverkapazität nicht überschreitet; und
wobei zum Bestimmen, ob zwei Arbeitslasten, sofern gemischt, die Neuauslegungskosten einsparen, eine binäre Repräsentation verwendet wird, wobei unter Vorgabe einer Arbeitslast $\vec{w}_i$ von T Elementen, ein binärer Vektor $\vec{b}_i$ erstellt wird, um sie zu repräsentieren, wo $b_{i,t} = 1$, wenn $w_{i,t-1} < w_{i,t}$, und $b_{i,t} = 0$, andernfalls und für zwei Arbeitslasten, die durch zwei binäre Vektoren $\vec{b}_i$ und $\vec{b}_j$ repräsentiert werden, die Neuauslegungskosten eingespart werden können, wenn $\vec{b}_i \oplus \vec{b}_j \neq \mathbf{0}$ wo $\oplus$ die Exklusiv-oder-Operation ist.

7. System nach Anspruch 6, wobei der Neuauslegungsverwalter betreibbar ist, eine oder mehrere Anweisungen zum Instanziieren oder Löschen von einem oder mehreren VMs oder Diensten in VMs, um Arbeitslasten in die Gruppe aufzunehmen, zu erzeugen.

8. Neuauslegungsverwalter (501) in einem System, wobei der Neuauslegungsverwalter (501) zu Folgendem ausgelegt ist:

Normalisieren der Arbeitslasten, um sie hinsichtlich der Ressourcen, die sie verbrauchen, oder der Anzahl von VMs, die sie verwenden, miteinander vergleichbar zu machen;
Glätten der normalisierten Arbeitslasten, um Schwankungen zu filtern, die schneller variieren als die Granularität von Zeitintervallen, in denen Ressourcenneuauslegungen durchgeführt werden;
Kategorisieren der normalisierten und geglätteten Arbeitslasten, um mindestens eine Arbeitslastgruppe zu erzeugen, die einen Satz von Arbeitslasten umfasst, für die die Kosten zum Neuauslegen von Ressourcen, die von den Arbeitslasten in der Arbeitslastgruppe verbraucht werden, kleiner sind als die Summe der Kosten zum unabhängigen Neuauslegen der Ressourcen; und
Zuweisen von jeder der mindestens einen Arbeitslastgruppe zu einem jeweiligen von mehreren Servern des Systems auf Basis einer Kapazität des jeweiligen Servers,
wobei eine Arbeitslast nur als Teil einer Gruppe ausgewählt wird, wenn sie die Neuauslegungskosten einsparen kann, wenn sie mit den Arbeitslasten, die sich bereits in dieser Gruppe befinden, gemischt wird und wenn sie, sofern ausgewählt, die Serverkapazität nicht überschreitet; und
wobei zum Bestimmen, ob zwei Arbeitslasten, sofern gemischt, die Neuauslegungskosten einsparen, eine binäre Repräsentation verwendet wird, wobei unter Vorgabe einer Arbeitslast $\vec{w}_i$ von T Elementen, ein binärer Vektor $\vec{b}_i$ erstellt wird, um sie zu repräsentieren, wo $b_{i,t} = 1$, wenn $w_{i,t-1} < w_{i,t}$, und $b_{i,t} = 0$, andernfalls und für zwei Arbeitslasten, die durch zwei binäre Vektoren $\vec{b}_i$ und $\vec{b}_j$ repräsentiert werden, die Neuauslegungskosten eingespart werden können, wenn $\vec{b}_i \oplus \vec{b}_j \# 0$, wo $\oplus$ die Exklusiv-oder-Operation ist.

9. Neuauslegungsverwalter (501) nach Anspruch 8, wobei der Neuauslegungsverwalter dazu ausgelegt ist, eine Arbeitslast als Teil einer Gruppe in dem Fall auszuwählen, in dem, sofern die ausgewählte Arbeitslast mit den Arbeitslasten gemischt wird, die sich bereits in der Gruppe befinden, die Neuauslegungskosten kleiner sind als die einzelnen Kosten und sofern sie, sofern ausgewählt, eine Serverkapazität nicht überschreitet.

10. Computerprogrammprodukt, das ein von einem Computer verwendbares Medium umfasst, auf dem sich computerlesbarer Programmcode befindet, wobei der computerlesbare Programmcode angepasst ist, ausgeführt zu werden, um ein Verfahren zum Verwalten einer Arbeitslastverteilung in einem virtualisierten System nach einem der Ansprüche 1 bis 5 zu implementieren.

**Revendications**

1. Procédé pour la gestion de la répartition de la charge de travail dans un système, le procédé comprenant :
pour un ensemble de services exécutés dans le système, des services respectifs comprenant de multiples charges de travail :

   la normalisation (203) des charges de travail pour les rendre comparables les unes aux autres en termes des ressources qu'elles consomment ou du nombre de machines virtuelles, VM, qu'elles utilisent ;
   le lissage (205) des charges de travail normalisées pour filtrer des fluctuations qui varient plus vite que la granularité d'intervalles temporels auxquels des reconfigurations de ressources sont réalisées ;
   la catégorisation (207) des charges de travail normalisées et lissées pour générer au moins un groupe de charges de travail comprenant un ensemble de charges de travail pour lesquelles le coût pour reconfigurer des ressources consommées par les charges de travail dans le groupe de charges de travail est inférieur à la somme des coûts pour reconfigurer indépendamment les ressources ; et
   l'allocation de chacun parmi l'au moins un groupe de charges de travail à un serveur respectif parmi de multiples serveurs du système sur la base d'une capacité du serveur respectif,
   dans lequel une charge de travail est sélectionnée pour faire partie d'un groupe uniquement si elle peut économiser le coût de reconfiguration si elle est mélangée avec les charges de travail qui sont déjà dans ce groupe et si elle ne dépasse pas la capacité de serveur si elle est sélectionnée ; et
   dans lequel pour déterminer si deux charges de travail, si elles sont mélangées, économisent le coût de reconfiguration, une représentation binaire est utilisée, dans laquelle, étant donnée une charge de travail $\vec{w}_i$ de T éléments, un vecteur binaire $\vec{b}_i$ est composé pour la représenter, où $b_{i,t} = 1$ si $w_{i,t-1} < w_{i,t}$, et $b_{i,t} = 0$ dans le cas contraire et pour deux charges de travail représentées par deux vecteurs binaires $\vec{b}_i$ et $\vec{b}_j$, le coût de reconfiguration peut être économisé si $\vec{b}_i \oplus \vec{b}_j \neq 0$, où $\oplus$ est l'opération ou-exclusif.

2. Procédé selon la revendication 1, dans lequel l'ensemble de services sont des services homogènes et les charges de travail sont des charges de travail homogènes.

3. Procédé selon la revendication 1, dans lequel l'ensemble de services sont des services homogènes et les charges de travail sont des charges de travail hétérogènes.

4. Procédé selon la revendication 1, dans lequel l'ensemble de services sont des services hétérogènes et les charges de travail sont des charges de travail hétérogènes.

5. Procédé selon la revendication 1, comprenant en outre :
l'instanciation ou la suppression d'une ou de plusieurs VM ou d'un ou de plusieurs services dans des VM pour accueillir des charges de travail dans le groupe.

6. Système pour la gestion de la répartition de la charge de travail, le système comprenant :

   un répartiteur de charge de travail (503) pour recevoir des données représentant de multiples charges de travail devant être réparties sur des machines virtuelles instanciées sur un matériel physique du système, les charges de travail étant associées à un ensemble de services en cours d'exécution dans le système ;
   un gestionnaire de reconfiguration (501) configuré pour :

      normaliser les charges de travail pour les rendre comparables les unes aux autres en termes des ressources qu'elles consomment ou du nombre de VM qu'elles utilisent ;
      lisser les charges de travail normalisées pour filtrer des fluctuations qui varient plus vite que la granularité d'intervalles temporels auxquels des reconfigurations de ressources sont réalisées ;
      catégoriser les charges de travail normalisées et lissées pour générer au moins un groupe de charges de travail comprenant un ensemble de charges de travail pour lesquelles le coût pour reconfigurer des ressources consommées par les charges de travail dans le groupe de charges de travail est inférieur à la somme des coûts pour reconfigurer indépendamment les ressources ; et

allouer chacun parmi l'au moins un groupe de charges de travail à un serveur respectif parmi de multiples serveurs du système sur la base d'une capacité du serveur respectif,

dans lequel une charge de travail est sélectionnée pour faire partie d'un groupe uniquement si elle peut économiser le coût de reconfiguration si elle est mélangée avec les charges de travail qui sont déjà dans ce groupe et si elle ne dépasse pas la capacité de serveur si elle est sélectionnée ; et

dans lequel pour déterminer si deux charges de travail, si elles sont mélangées, économisent le coût de reconfiguration, une représentation binaire est utilisée, dans laquelle, étant donnée une charge de travail $\vec{w}_i$ de $T$ éléments, un vecteur binaire $\vec{b}_i$ est composé pour la représenter, où $b_{i,t} = 1$ si $w_{i,t-1} < w_{i,t}$, et $b_{i,t} = 0$ dans le cas contraire et pour deux charges de travail représentées par deux vecteurs binaires $\vec{b}_i$ et $\vec{b}_j$, le coût de reconfiguration peut être économisé si $\vec{b}_i \oplus \vec{b}_j \neq 0$, où $\oplus$ est l'opération ou-exclusif.

7. Système selon la revendication 6, dans lequel le gestionnaire de reconfiguration est apte à fonctionner pour générer une ou plusieurs instructions pour instancier ou supprimer une ou plusieurs VM ou un ou plusieurs services dans des VM pour accueillir des charges de travail dans le groupe.

8. Gestionnaire de reconfiguration (501) dans un système, le gestionnaire de reconfiguration (501) étant configuré pour :

normaliser les charges de travail pour les rendre comparables les unes aux autres en termes des ressources qu'elles consomment ou du nombre de VM qu'elles utilisent ;

lisser les charges de travail normalisées pour filtrer des fluctuations qui varient plus vite que la granularité d'intervalles temporels auxquels des reconfigurations de ressources sont réalisées ;

catégoriser les charges de travail normalisées et lissées pour générer au moins un groupe de charges de travail comprenant un ensemble de charges de travail pour lesquelles le coût pour reconfigurer des ressources consommées par les charges de travail dans le groupe de charges de travail est inférieur à la somme des coûts pour reconfigurer indépendamment les ressources ; et

allouer chacun parmi l'au moins un groupe de charges de travail à un serveur respectif parmi de multiples serveurs du système sur la base d'une capacité du serveur respectif,

dans lequel une charge de travail est sélectionnée pour faire partie d'un groupe uniquement si elle peut économiser le coût de reconfiguration si elle est mélangée avec les charges de travail qui sont déjà dans ce groupe et si elle ne dépasse pas la capacité de serveur si elle est sélectionnée ; et

dans lequel pour déterminer si deux charges de travail, si elles sont mélangées, économisent le coût de reconfiguration, une représentation binaire est utilisée, dans laquelle, étant donnée une charge de travail $\vec{w}_i$ de $T$ éléments, un vecteur binaire $\vec{b}_i$ est composé pour la représenter, où $b_{i,t} = 1$ si $w_{i,t-1} < w_{i,t}$, et $b_{i,t} = 0$ dans le cas contraire et pour deux charges de travail représentées par deux vecteurs binaires $\vec{b}_i$ et $\vec{b}_j$, le coût de reconfiguration peut être économisé si $\vec{b}_i \oplus \vec{b}_j \neq 0$, où $\oplus$ est l'opération ou-exclusif.

9. Gestionnaire de reconfiguration (501) selon la revendication 8, dans lequel le gestionnaire de reconfiguration est configuré pour sélectionner une charge de travail pour faire partie d'un groupe dans le cas où le coût de reconfiguration, si la charge de travail sélectionnée est mélangée avec les charges de travail qui sont déjà dans le groupe, est inférieur aux coûts individuels et si elle ne dépasse pas une capacité de serveur si elle est sélectionnée.

10. Produit programme d'ordinateur, comprenant un support utilisable par ordinateur ayant un code de programme lisible par ordinateur incorporé en son sein, ledit code de programme lisible par ordinateur étant conçu pour être exécuté pour mettre en œuvre un procédé pour la gestion de la répartition de la charge de travail dans un système virtualisé selon l'une quelconque des revendications 1 à 5.

FIG. 1

Input: workloads, server capacity, normalization factor, etc. ⌐201

Normalize: workload resource consumption is transformed to a common unit. ⌐203

Smooth: reduce fluctuations by keeping the maximal within time windows. ⌐205

Workload categorization:model and solve optimization problem using heuristic algorithms. ⌐207

Decision implementation: enforce the solution produced in the previous step. ⌐209

FIG. 2

FIG. 3

FIG. 4

**FIG. 5**

EP 3 291 091 B1

FIG. 6

FIG. 7

EP 3 291 091 B1

FIG. 8

800

| | | |
|---|---|---|
| 802 | PROCESSOR | |
| 824 | INSTRUCTIONS | |
| 804 | MAIN MEMORY | |
| 824 | INSTRUCTIONS | |
| 806 | STATIC MEMORY | |

808 BUS

| | |
|---|---|
| VIDEO DISPLAY | 810 |
| ALPHA-NUMERIC INPUT DEVICE | 812 |
| CURSOR CONTROL DEVICE | 814 |

DRIVE UNIT — 816

MACHINE-READABLE MEDIUM — 822

INSTRUCTIONS — 824

820 NETWORK INTERFACE DEVICE

826 NETWORK

SIGNAL GENERATION DEVICE — 818

FIG. 9

**EP 3 291 091 B1**

**REFERENCES CITED IN THE DESCRIPTION**

**Non-patent literature cited in the description**

- Dynamic workload management in heterogeneous Cloud computing environments. **ZHANG QI et al.** 2014 IEEE NETWORK OPERATIONS AND MANAGEMENT SYMPOSIUM (NOMS). IEEE, 05 May 2014